# EUROPÄISCHE PATENTSCHRIFT

(11) **EP 0 454 944 B1**
(45) Veröffentlichungstag und Bekanntmachung des Hinweises auf die Patenterteilung: **13.04.1994**
(21) Anmeldenummer: 91100669.0
(22) Anmeldetag: 21.01.1991
(51) Int. Cl.: B60B 27/00, B60B 37/10

(54) **Radlagerung**
Wheel bearing
Palier de roue

(30) Priorität: 04.05.1990 DE 4014399
(43) Veröffentlichungstag der Anmeldung: 06.11.1991
(73) Patentinhaber: Dr.Ing.h.c. F. Porsche Aktiengesellschaft, 70435 Stuttgart (DE)
(72) Erfinder: Wöhler, Hans-Jürgen, W-7000 Stuttgart 80 (DE)

(56) Entgegenhaltungen:
- EP-A- 0 181 654
- DE-A- 3 703 395
- FR-A- 2 482 016
- GB-A- 165 490
- GB-A- 2 112 500
- US-A- 1 956 236

## Beschreibung

Die Erfindung bezieht sich auf eine Radlagerung nach dem Oberbegriff des Anspruchs 1.

Aus der DE-A 21 13 723 ist eine Radlagerung für ein Kraftfahrzeugrad bekannt, die ein mit einem Radträger verbundenes zweireihiges Kugellager umfaßt, durch das sich eine Hohlwelle einer Radnabe erstreckt, an der endseitig an der Radinnenseite ein Verbindungselement aufgesteckt und über eine durchgeführte Schraube befestigt ist. Bei einer solchen Lageranordnung ist ein Zusammenbau über die durchgeführte Schraube aufwendig und ein Leichtbau ist aufgrund der beachtlichen Länge der Hohlwelle nicht gegeben.

Aus der DE 37 03 395 ist eine Radlagerung bekannt, bei der sich an ein Gehäuse eines Gelenkes ein Spannbolzen anschließt, der eine als Hülse ausgebildete Radnabe durchdringt, die in einem Kugellager gehalten ist. Die Hülse erstreckt sich nahezu durch das gesamte Kugellager und steht einem anfangsseitigen Bund des Spannbolzens im Kugellager gegenüber.

Aufgabe der Erfindung ist es, eine Lageranordnung für ein Kraftfahrzeugrad zu schaffen, die einfach zu montieren ist und eine leichtbauende Baueinheit bei optimaler Sicherheit ergibt.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Zusammenbau bzw. das Verspannen nur von der Radaußenseite her erfolgt. Bei einer Demontage kann das Nabenteil nach Lösen der Mutter in einfacher Weise aus dem Kugellager herausgezogen werden.

Die Verwendung einer Leichtmetallnabe statt einer Stahlnabe ergibt einen wesentlichen Gewichtsvorteil. Zur Erzielung einer optimalen Lagerabstützung ist die Leichtmetallnabe mit einem rohrförmigen Ansatz versehen, der nur eine solche Länge aufweist, daß eine ausreichende Längsabstützung sowie eine Radzentrierung gewährleistet ist.

Zur Herstellung eines Formschlusses zwecks Erzielung einer Drehmomentabstützung weisen Radnabe und Spannbolzen polygonale Abschnitte auf, die ineinander geführt sind. Vorzugsweise wird ein Fünfkant und eine entsprechend ausgeführte Aufnahme in der Radnabe verwendet.
Eine Zentrierung der Radnabe erfolgt über den Spannbolzen, der hierzu einen mit dem Lagerinnenring verbundenen hülsenförmigen Ansatz sowie einen anschließenden polygonalen Zapfen aufweist, der in den rohrförmigen Ansatz hinein gesteckt wird und diesen zentrierend aufnimmt.

Ein Ausführungsbeispiel der Erfindung ist in der Zeichnung dargestellt und wird im folgenden näher beschrieben.

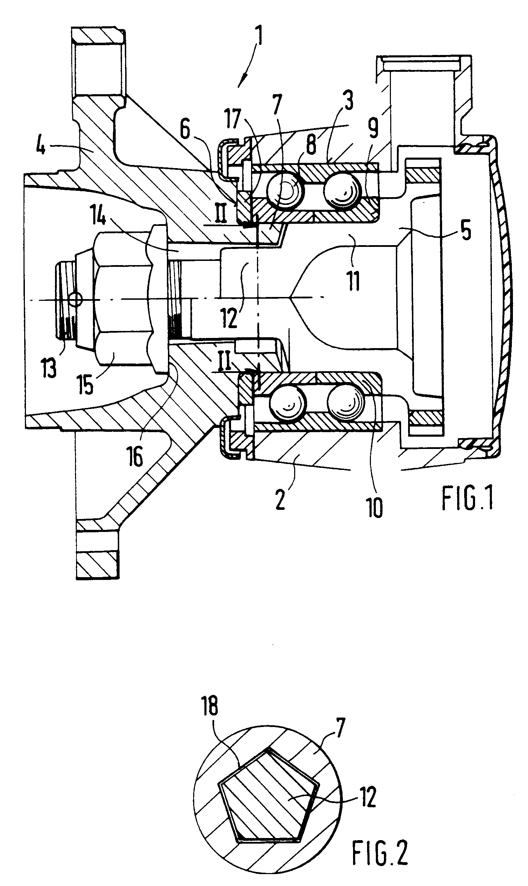

Es zeigen
- Fig.1: einen Schnitt durch eine Radlagerung mit einer Leichtmetall-Radnabe und einem Stahl-Spannbolzen und
- Fig. 2: einen Schnitt nach der Linie II-II der Fig.1 durch einen rohrförmigen Ansatz der Radnabe und einem Zapfen des Spannbolzens.

Die Radlagerung 1 für ein Kraftfahrzeug-Rad umfaßt im wesentlichen ein in ein Radträger 2 eingepreßtes zweireihiges Kugellager 3, in dem eine Radnabe 4 und ein Spannbolzen 5 über eine Spanneinrichtung gehalten sind.

Die Radnabe 4 weist eine dem Lager 3 sowie dem Radträger 2 zugerichtete stirnseitige Abstützfläche 6 auf, an die sich ein zentrisch angeordneter rohrförmiger Ansatz 7 anschließt, der in das Lager 3 hineinragt und sich -in bezug auf die Radaußenseite- bis zur ersten Lagerkugel 8 erstreckt.

Gegenüberstehend zur Radnabe 4 ist der Spannbolzen 5 angeordnet, der sich mit einer Stirnfläche 9 axial am Lagerinnenring 10 des Kugellagers 3 abstützt. Anschließend an diese Stirnfläche 9 erstreckt sich bis zum Ansatz 7 der Nabe 4 eine zentrische Lagerhülse 11, die in einen zentrischen Zapfen 12 übergeht und in den rohrförmigen Ansatz 7 zentrierend hineinragt.

Der rohrförmige Ansatz 7 weist eine in Achsrichtung der Nabe 4 verlaufende im Querschnitt polygonale Aufnahme 18, insbesondere bestehend aus einem Fünfeck, auf. In diese Aufnahme 18 ragt der entsprechend ausgebildete Zapfen 12 hinein.

An den Zapfen 12 des Spannbolzen 5 anschließend ist ein Gewindebolzen 13 vorgesehen, der durch eine Bohrung 14 der Nabe 4 hindurchgeführt ist und endseitig zum Verspannen eine Mutter 15 trägt. Diese wird gegenüber der Radnabe 4 festgezogen, wozu sie gegen einen Absatz 16 des Nabenkörpers gespannt wird. Hierdurch erfolgt ein Festspannen der Radnabe 4 am Kugellager 3.

Zur Erzielung einer minimalen Flächenpressung von der Nabe 4 zum Lagerinnenring 10 ist vorzugsweise ein Stahlring 17 zwischen Nabe 4 und Lager 3 geschaltet.

Damit die Radlagerung ein geringes Gewicht aufweist, besteht die Radnabe 4 vorzugsweise aus einem Leichtmetall und der Spannbolzen 5 aus einem Stahl-Werkstoff.

## Patentansprüche

1. Radlagerung für Räder von Kraftfahrzeugen, die ein mit einem Radträger verbundenes zweireihiges Kugellager aufweist, das eine über eine Spanneinrichtung befestigte Radnabe haltend aufnimmt, **dadurch gekennzeichnet**, daß die Radnabe (4) axial am Kugellager (3) abgestützt ist und sich mit einem rohrförmigen Ansatz (7) bis zu einer ersten Lagerkugel (8) - in bezug auf die Radaußenseite - erstreckend im Kugellager (3) gehalten ist, wobei gegenüberstehend der Radnabe (4) ein am Kugellager (3) axial abgestützter Spannbolzen (5) angeordnet ist, der sich mit einer Lagerhülse (11) bis zum hülsenförmigen Ansatz (7) erstreckt und diesen über einen zentrischen Zapfen (12) verdrehgesichert aufnimmt.

2. Radlagerung nach Anspruch 1, **dadurch gekennzeichnet**, daß die Radnabe (4) aus einem Leichtmetallwerkstoff und der Spannbolzen (5) aus einem Stahlwerkstoff besteht.

3. Radlagerung nach den Ansprüchen 1 oder 2, **dadurch gekennzeichnet**, daß der rohrförmige Ansatz (7) eine im Querschnitt polygonale formschlüssige Aufnahme für den zentrischen Zapfen (12) des Spannbolzens (5) bildet, der mit einer korrespondierenden polygonalen Querschnittsform versehen ist.

4. Radlagerung nach einem oder mehreren der vorhergehenden Ansprüche, **dadurch gekennzeichnet**, daß der Spannbolzen (5) einen sich zur Radaußenseite hin erstreckenden Gewindebolzen (13) aufweist, der mit einer einen Ansatz (16) der Radnabe (4) übergreifenden Mutter (15) verbindbar ist.

5. Radlagerung nach einem oder mehreren der vorhergehenden Ansprüche, **dadurch gekennzeichnet**, daß zwischen einer Stirnfläche des Kugellagers (3) sowie einer stirnseitigen Abstützfläche (6) der Radnabe (4) ein Stahlring (17) angeordnet ist.

## Claims

1. A mounting for wheels of motor vehicles, comprising a double-row ball bearing which is connected to a wheel support and which receives in a retaining manner a wheel hub secured by way of a tensioning device, **characterized in that** the wheel hub (4) is supported axially on the ball bearing (3) and is held in the ball bearing (3) by a tubular attachment (7) extending as far as a first bearing ball (8) with respect to the outside of the wheel, wherein a tensioning bolt (5) supported axially on the ball bearing (3) is arranged opposite the wheel hub (4), the tensioning bolt (5) extending with a bearing sleeve (11) as far as the sleeve-shaped attachment (7) and receiving the said attachment (7) by way of a central stub (12) so as to prevent it from rotating.

2. A wheel mounting according to Claim 1, **characterized in that** the wheel hub (4) consists of a light metallic material and the tensioning bolt (5) consists of a steel material.

3. A wheel mounting according to Claim 1 or 2, **characterized in that** the tubular attachment (7) forms a positively locking receiving means of polygonal cross-section for the central stub (12) of the tensioning bolt (5) provided with a corresponding polygonal cross-sectional shape.

4. A wheel mounting according to one or more of the preceding Claims, **characterized in** **that** the tensioning bolt (5) has a threaded pin (13) extending towards the outside of the wheel and connectable to a nut (15) which engages over an attachment (16) of the wheel hub (4).

5. A wheel mounting according to one or more of the preceding Claims, **characterized in** **that** a steel ring (17) is arranged between an end face of the ball bearing (3) and an end support face (6) of the wheel hub (4).

## Revendications

1. Palier de roue, pour des roues de véhicules, présentant un roulement à billes à deux rangées de billes, relié à un support de roue, et recevant, en le supportant, un moyeu de roue, fixé par l'intermédiaire d'un dispositif de serrage, caractérisé en ce que le moyeu de roue (4) prend appui axialement sur le roulement à billes (3) et est maintenu, en s'étendant, par un appendice (7) tubulaire, dans le roulement à billes (3), jusqu'au premier roulement à billes (8) - par rapport à la face extérieure de la roue -, un boulon de serrage (5), s'étendant, par un manchon de palier (11), jusqu'à l'appendice (7) en forme de douille et le supportant de façon bloquée en rotation, par l'intermédiaire d'un tourillon (12) centré, étant disposé du côté opposé au moyeu de roue (4), en prenant appui axialement sur le roulement à billes (3).

2. Palier de roue selon la revendication 1, caractérisé en ce que le moyeu de roue (4) est réalisé en métal léger et le boulon de serrage (5) en acier.

3. Palier de roue selon la revendication 1 ou 2, caractérisé en ce que l'appendice tubulaire (7) forme un logement produisant un ajustement de forme à section transversale polygonale pour le tourillon (12) centré du boulon de serrage (5), pourvu d'une section transversale de forme polygonale correspondante.

4. Palier de roue selon l'une ou plusieurs des revendications précédentes, caractérisé en ce que le boulon de serrage (5) présente un boulon fileté (13) s'étendant vers la face extérieure de la roue, susceptible d'être relié à un écrou (15) enchâssant un appendice (16) du moyeu de roue (4).

5. Palier de roue selon l'une ou plusieurs des revendications précédentes, caractérisé en ce qu'une bague en acier (17) est disposée entre une face frontale du roulement à billes (3) et une face d'appui (6) frontale du moyeu de roue (4).
